# EUROPEAN PATENT APPLICATION

(11) **EP 4 722 711 A1**
(43) Date of publication of application: **08.04.2026**
(21) Application number: 23938492.8
(22) Date of filing: 24.05.2023
(51) Int. Cl.: G01N 30/88, G01N 30/02

(54) **ELUENT FOR SEPARATING HEMOGLOBIN AND METHOD FOR SEPARATING SAME**

(71) Applicant: Tosoh Corporation, Yamaguchi 746-8501 (JP)
(72) Inventor: MEGURO, Tomohiro, Shunan-shi, Yamaguchi 746-8501 (JP); SASAKI, Yusuke, Shunan-shi, Yamaguchi 746-8501 (JP); OGINO, Shinji, Shunan-shi, Yamaguchi 746-8501 (JP)
(74) Representative: Novagraaf International SA
(86) International application number: PCT/JP2023/019317
(87) International publication number: WO 2024/241529

(57) **Abstract**

The present invention provides: an eluent which is passed, in an analysis of a hemoglobin mixture using cation exchange chromatography, when separating/analyzing at least one of hemoglobin A2 or abnormal hemoglobin E, D, S, or C from hemoglobin A0, and which comprises at least one acid selected from among hydrochloric acid, sulfuric acid, and carboxylic acids which are kosmotropic salts in the Hofmeister series or salts having a structure similar to thereto; and a method using the eluent.

## Description

### FIELD

The present invention relates to an eluent for separating hemoglobin A2 or abnormal hemoglobin E, D, S and C from hemoglobin A0, and to a method for separating them.

### BACKGROUND

Blood hemoglobin is an important parameter in diagnostic analysis. For example, hemoglobin A1c (glycated hemoglobin) in blood is a marker for diabetes, and various quantifying methods for its analysis have been developed. Cation-exchange chromatography, a method that allows rapid, highly reproducible measurement, is widely used in the field of medical diagnosis. Cation-exchange chromatography can be utilized not only for analysis of hemoglobin A1c but also for diagnosis of hemoglobinopathies (common hemoglobinopathy and thalassemia), and therefore its related technologies are currently under active development.

For diagnosis of hemoglobinopathy by cation-exchange chromatography, the abnormal hemoglobin components E, D, S and C or hemoglobin A2 (which is important for diagnosis of thalassemia), are separated from the hemoglobin A0 component and quantified. Even when it is desired to measure the hemoglobin A1c value alone, it is still preferable to be able to separate and detect abnormal hemoglobin components, since abnormal hemoglobin affects the hemoglobin A1c value. However, it has been difficult to rapidly and reproducibly separate such hemoglobin fractions. In particular, since hemoglobin A2 and the abnormal hemoglobin E, D, S, C and hemoglobin A0 have very similar ionic properties, it is necessary to precisely control the elution conditions during chromatography because they interact very closely with the packing used for cation-exchange chromatography. Since it is desirable to simultaneously and rapidly analyze these components along with hemoglobin A1c and fetal hemoglobin F, a component that elutes before hemoglobin A0, it is essential for such separation and analysis of hemoglobin to be carried out in an efficient manner.

It has been shown, incidentally, that additives added to the eluent used for hemoglobin analysis improve separation performance. Specifically, analysis of A1c, a component that elutes before hemoglobin A0, it has been shown to be effective to use strong chaotropic salts in the Hofmeister series, such as salts of perchloric acid (PTL 1). However, it has been difficult to control elution output for separation of components after hemoglobin A0, and new methods are therefore being explored, primarily in regard to salts with different properties than those of the Hofmeister series. Ion pair reagents have been found, for example, as salts effective for separation of components eluting after hemoglobin A0 (PTL 2). However, since it is necessary in such methods to precisely control the pH of the eluent in response to the isoelectric point of each hemoglobin to be separated (pH ~7.0), it is not always easy to conduct simultaneous analysis of the different types of hemoglobin that elute before hemoglobin A0.

Other methods have also been reported for efficiently separating components that elute after hemoglobin A0, such methods utilizing a large pH gradient for the eluent that is used (PTL 3). Specifically, a method has been reported for separating hemoglobin A0 and A2, wherein eluent A, used for elution of hemoglobin components that elute before hemoglobin A0, and eluent B (with a pH of at least 0.5 higher than eluent A) used for elution of hemoglobin components that elute after hemoglobin A0, are passed through in that order. As an alternative to methods utilizing such pH gradients, there has also been reported a rapid separation method for hemoglobin A0 fractionation using an eluent containing multiple salt types (PTL 4).

Specifically, the eluent A used for elution of hemoglobin components that elute before hemoglobin A0 in this method comprises the entire amount of a chaotropic salt and two different salts with acid dissociation constants in specified ranges. The eluent A improves the separative power for hemoglobin components that elute before hemoglobin A0 and shortens the analysis time, whereas separation of the hemoglobin components that elute after hemoglobin A0 is dependent on the pH gradient, similar to PTL 3.

Thus, while effective salt species have been found for separation of hemoglobin components that elute before hemoglobin A0, almost no salt species have yet been studied that are effective for separation of hemoglobin components that elute after hemoglobin A0. It has been shown that an eluent pH gradient or addition of an ion pair reagent can be effective for separation of hemoglobin components that elute after hemoglobin A0, but in most cases the other types of salts in the eluent have been selected in an arbitrary manner. For example, while a method of separation using a phosphate buffer is known from PTL 5, its effect has not yet been investigated in detail, and the effects of other salts on separation have not been analyzed in a systematic manner.

### [CITATION LIST]

### [PATENT LITERATURE]

[PTL 1] Japanese Unexamined Patent Publication No. 2000-055899
[PTL 2] Japanese Patent Publication No. 5322736
[PTL 3] Japanese Patent Publication No. 4420539
[PTL 4] Japanese Patent Publication No. 2014-095638
[PTL 5] US Patent No. 04810391

### [NON PATENT LITERATURE]

[NPL 1] A.M. Hyde, S.L. Zultanski, J.H. Waldman, Y.-L. Zhong, M. Shevlin, F. Peng, Org. Process Res. Dev. 2017, 21, 1355.

### SUMMARY

### [TECHNICAL PROBLEM]

The present invention provides an eluent with improved separative power for components that elute after A0 in hemoglobin analysis using cation-exchange chromatography, as well as a method for the same.

### [SOLUTION TO PROBLEM]

As a result of much diligent research on elution of hemoglobin A0 components and eluents utilized for elution of components after hemoglobin A0, the present inventors have found that addition of kosmotropic salts is effective for separation of components that elute after hemoglobin A0.

Kosmotropic salts are salts that increase the stability of interaction between water molecules. Kosmotropic property strength is generally represented in the Hofmeister series. This series is defined by the minimum salt concentration required for salting out, as determined in the course of examining different salts. For anions, salts with a salting out effect that is greater than chlorine anion are considered to be kosmotropic, while salts with a salt-soluble effect are considered to be chaotropic. The salt species in the Hofmeister series are also associated with a variety of phenomena with similar effects on interaction. For example, addition of such salt species is known to affect the elution profile in chromatography. However, while the importance of the Hofmeister series is well recognized, virtually no systematic research has been conducted other than for typical salt species, and it has only been in recent years that research has been revisited on the strength of salting out effects (NPL 1).

On the other hand, while the effectiveness of some typical chaotropic salts in hemoglobin HPLC analysis has been demonstrated, the effects of other salt species are still largely overlooked. Notably, in cases where separation between hemoglobin A0 and abnormal hemoglobin E or hemoglobin A2 is difficult to achieve, the focus has been solely on methods that utilize effects based on principles other than the Hofmeister series, such as pH gradient or ion pair reagents, and therefore the effects of salt species with buffering action, or salt species used to control elution output, have been largely ignored.

Given this situation, the present inventors closely examined the effects on separation exhibited by salt species in the Hofmeister series. Specifically, eluents containing salt species commonly used in buffering and other agents, either of the Hofmeister series or those having structures similar to them, were prepared to the same pH, and then specimens containing abnormal hemoglobin E were analyzed, examining in detail the modes of separation from A0. As a result it was found that the separative power between components A0 and E is improved by kosmotropic salts, which exhibit the opposite property from chaotropic salts in the Hofmeister series when added to an eluent, and the invention was completed upon this finding.

The present invention will now be described in detail.
[1] An eluent to be used during analysis of a hemoglobin mixture using cation-exchange chromatography, for analysis of hemoglobin components that elute after the hemoglobin A0 component, the eluent being passed through for separation and analysis of at least one from among abnormal hemoglobin E, D, S, C or hemoglobin A2 from the hemoglobin A0 component, and
   the eluent comprising one or more selected from among salts of carboxylic acids, hydrochloric acid and sulfuric acid, which are kosmotropic salts of the Hofmeister series, or salt species having structures similar to them.
[2] The eluent according to [1], wherein the kosmotropic salt includes one or more selected from among salts of acetic acid, succinic acid and hydroxycarboxylic acids.
[3] The eluent according to any one of [1] to [2], wherein the kosmotropic salt is a salt of citric acid.
[4] The eluent according to any one of [1] to [3], wherein the kosmotropic salt is a carboxylic acid salt, and which is passed through when hemoglobin A0 and A2 are separated and analyzed.
[5] The eluent according to [4], wherein the kosmotropic salt is selected from among one or more salts of malonic acid, fumaric acid and hydroxycarboxylic acids.
[6] The eluent according to [4] or [5], wherein the kosmotropic salt is a salt of citric acid.
[7] A method using an eluent according to any one of [1] to [6], wherein at least one of the abnormal hemoglobins E, D, S, C or hemoglobin A2 is separated and analyzed from the hemoglobin A0 component.
[8] A method using an eluent according to any one of [1] to [6], wherein:
   in addition to the eluent according to any one of [1] to [6] which is passed through while separating and analyzing hemoglobin A0 from abnormal hemoglobin E or A2,
   at least one eluent with weaker elution strength than that eluent is passed through to separate and elute out the hemoglobin components that elute before the A0 component, and
   after either or both hemoglobin F and hemoglobin A1c are separated and eluted, the eluent according to any one of [1] to [6] is passed through to separate and elute out the hemoglobin A0 from the abnormal hemoglobin E or A2.

### [ADVANTAGEOUS EFFECTS OF INVENTION]

The present invention provides an eluent with improved separative power for the A0 component in hemoglobin analysis by cation-exchange chromatography. Specifically, it provides an eluent that allows efficient separation and analysis of hemoglobin A0 from abnormal hemoglobin E or hemoglobin A2.

### BRIEF DESCRIPTION OF DRAWINGS

Fig. 1 shows a chromatogram for Comparative Example 1.
Fig. 2 shows a chromatogram for Example 1.
Fig. 3 shows a chromatogram for Example 2.
Fig. 4 shows a chromatogram for Example 3.
Fig. 5 shows a chromatogram for Example 4.
Fig. 6 shows a chromatogram for Example 5.
Fig. 7 shows a chromatogram for Example 6.
Fig. 8 shows a chromatogram for Example 7.
Fig. 9 shows a chromatogram for Example 8.
Fig. 10 shows a chromatogram for Example 9.
Fig. 11 shows a chromatogram for Example 10.
Fig. 12 shows a chromatogram for Example 11.

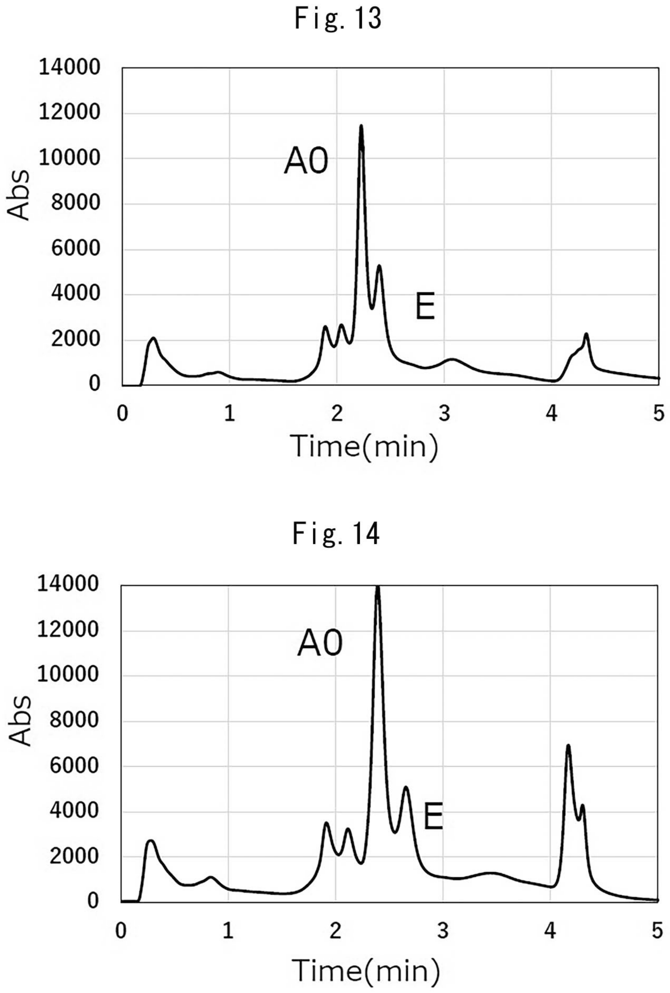

Fig. 13 shows a chromatogram for Example 12.
Fig. 14 shows a chromatogram for Example 13.

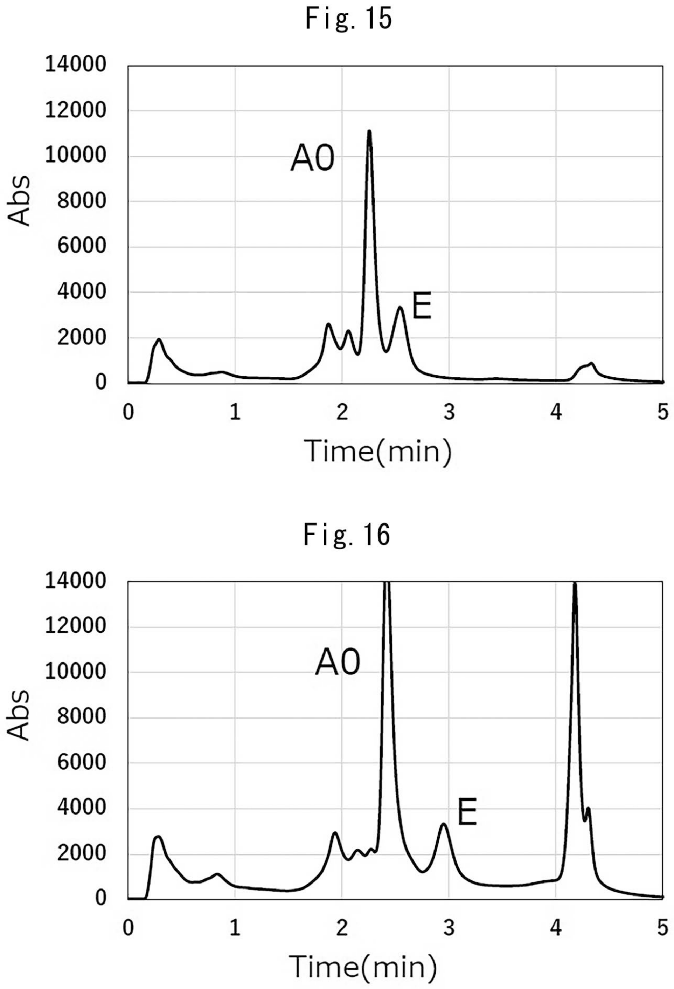

Fig. 15 shows a chromatogram for Example 14.
Fig. 16 shows a chromatogram for Example 15.

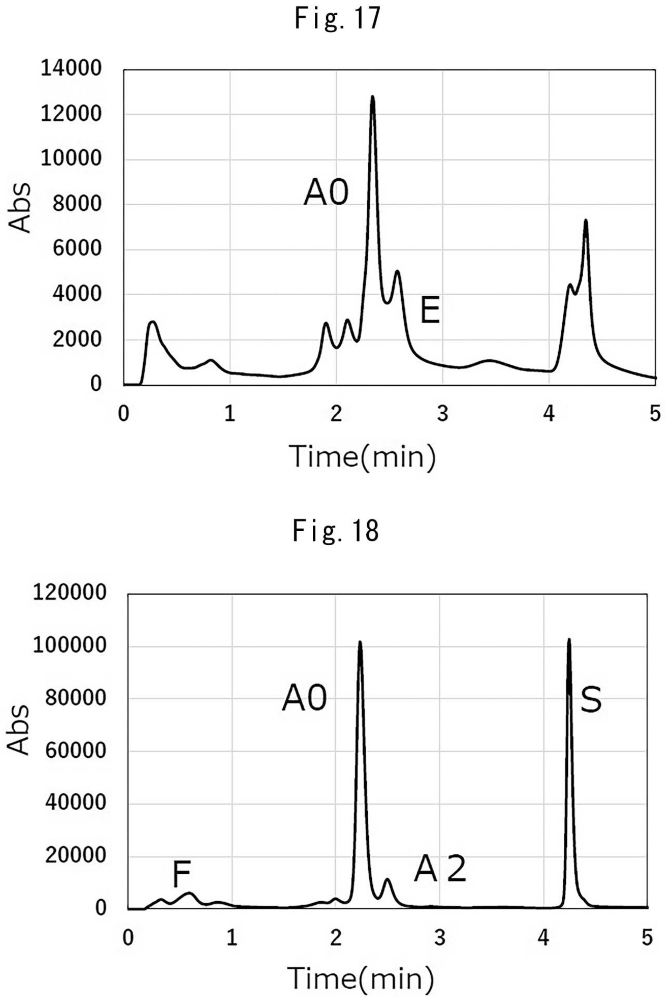

Fig. 17 shows a chromatogram for Example 16.
Fig. 18 shows a chromatogram for Example 17.

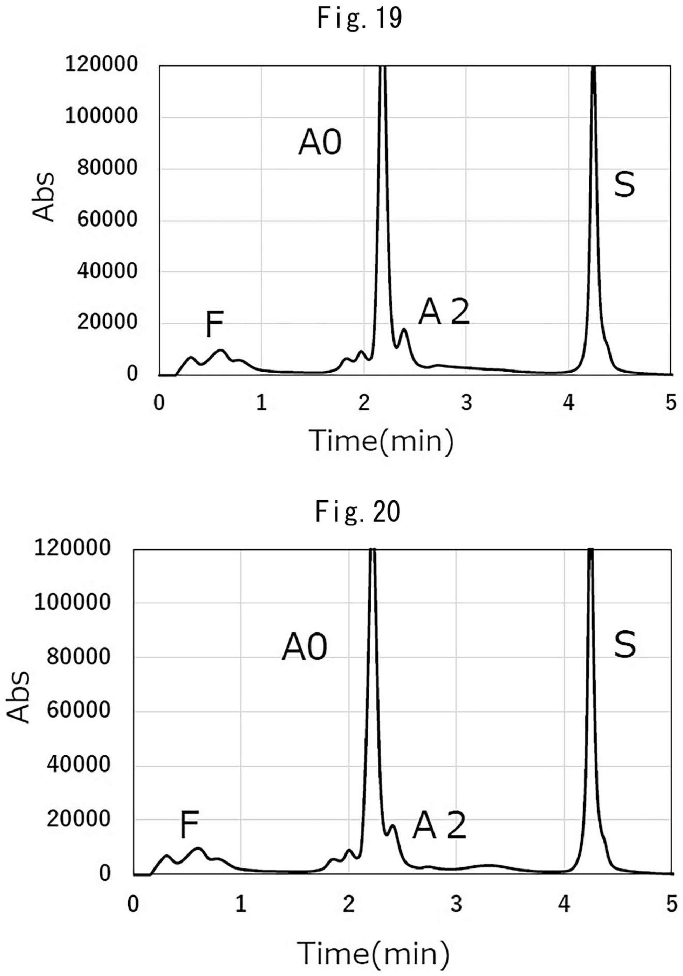

Fig. 19 shows a chromatogram for Example 18.
Fig. 20 shows a chromatogram for Example 19.
Fig. 21 shows a chromatogram for Example 20.
Fig. 22 shows a chromatogram for Example 21.

### DESCRIPTION OF EMBODIMENTS

The present invention will now be explained in greater detail. However, the invention can be implemented in different modes and is not limited only to the embodiments and Examples described below.

The present invention provides an eluent comprising a kosmotropic salt of an anion at least as kosmotropic as acetate ion, to be used for separation of hemoglobin E which elutes after A0, in cation-exchange chromatography using a column packed with a separating agent having a cation-exchange group.

The following are "kosmotropic salts of anions at least as kosmotropic as acetate ion", or salt species have structures that are similar. Salts of organic acids including carboxylic acids such as monocarboxylic acids, dicarboxylic acids, tricarboxylic acids and hydroxycarboxylic acids. Salts of inorganic acids including sulfuric acid and hydrochloric acid. Salts of monocarboxylic acids including acetic acid and propionic acid. Salts of dicarboxylic acids including succinic acid, malonic acid, fumaric acid, maleic acid and phthalic acid. Salts of tricarboxylic acids including tricarballylic acid. Salts of hydroxycarboxylic acids including malic acid, tartaric acid, citric acid, isocitric acid and lactic acid.

Carboxylic acids are preferably used, among which acetic acid, succinic acid or hydroxycarboxylic acids are more preferably used, and hydroxycarboxylic acids are even more preferably used, as kosmotropic salts. Citric acid is most preferred for use. Carboxylic acids or hydrochloric acid may also be used for separation of hemoglobin A0 and hemoglobin A2, which are more difficult to separate than hemoglobin A0 and abnormal hemoglobin E. More preferred among these are dicarboxylic acids such as malonic acid or fumaric acid, and hydroxycarboxylic acids. Citric acid is more preferred for use. The counter cations used in these anionic kosmotropic salts may be known ones, such as sodium and potassium.

It is only necessary to include at least one kosmotropic salt of an anion stronger than the chlorine anion in the eluent, although it may also include multiple kosmotropic salts. Kosmotropic salts may also be used as buffering agents, or they may be added as additives to buffering solutions that contain buffering agents other than kosmotropic salts. Buffering agents other than kosmotropic salts include those with organic acids such as amino acids, amines, imidazoles, pyridine, tris(hydroxymethyl)aminomethane, glycylglycine and pyrophosphoric acid. Inorganic acids include phosphoric acid and carbonic acid. Amino acids include aspartic acid, asparagine and glycine. Amines include ethylenediamine and triethanolamine.

Good's buffers may also be used in addition to the buffering agents mentioned above. Good's buffers include 2-(N-morpholino)ethanesulfonic acid (MES), N-2-hydroxyethylpiperazine-N'-ethanesulfonic acid (HEPES), bis(2-hydroxyethyl)iminotris-(hydroxymethyl)methane (Bistris), Tris, ADA, PIPES, Bistrispropane, ACES, MOPS, BES, TES, HEPES, HEPPS, Tricine, Bicine, glycylglycine, TAPS and CAPS. When the pH of the eluent used is outside of the buffer range of the added kosmotropic salt, it is particularly preferred to combine a kosmotropic salt or other buffering agent whose buffer range is within the pH range of the eluent used.

The eluent may also contain various additives in addition to kosmotropic salts or other buffering agent salts. For example, a chaotropic salt exhibiting the reverse property from the kosmotropic salt may be added. Since a chaotropic salt can often improve separation precision particularly for components that elute before A0, when components that elute before A0 and components that elute after A0 are to be analyzed simultaneously, the concentrations of the kosmotropic salt and chaotropic salt may be adjusted to modify separation of hemoglobin types. Preferred chaotropic salt ions include thiocyanate ion, iodide ion, perchlorate ion, nitrate ion and bromide ion. More preferred are iodide ion, nitrate ion, thiocyanate ion and perchlorate ion. Chaotropic salts of these anions may be used alone or in mixtures of more than one.

A pH regulator may also be added for adjustment of the pH of the eluent. An acid or base that is known as a pH regulator may be used, with acids including hydrochloric acid, phosphoric acid, nitric acid and sulfuric acid, and bases including sodium hydroxide, potassium hydroxide, lithium hydroxide, magnesium hydroxide, barium hydroxide and calcium hydroxide. The concentrations of such acids and bases are not restricted, and they may be added as appropriate for the target pH for the eluent. A water-soluble organic solvent may also be added, depending on the nature of the packing agent. The water-soluble organic solvent may be methanol, ethanol, acetonitrile or acetone, and it may be added in an amount such that the different salts added to the eluent do not precipitate. There may also be included additives, including chelating agents such as EDTA, antioxidants such as glutathione, or sodium azide to improve the separative power.

There are no particular restrictions on the pH range for the eluent comprising such components, but an effect of the kosmotropic salt for improving the separative power for components eluting after A0 can be obtained so long as the pH is in a range commonly used for hemoglobin analysis. Specifically, the range is preferably pH 4.0 to 8.0 and more preferably pH 5.0 to 7.0. The effect of the kosmotropic salt itself increases near the isoelectric point of hemoglobin (pH 6.0 to 8.0), but this requires retention of hemoglobin by ion-exchange groups. The separative power can also be improved by combining known technologies. For example, the separation performance may be improved if the pH gradient described in PTL 3 is applied with an eluent comprising a kosmotropic salt. The concentration of the kosmotropic salt will differ depending on the holding power of the packing that is used, but for use as a buffering agent it may be in a range with buffering action, such as 0.1 to 1000 mM and preferably 1 to 500 mM. For use as an additive, it may be 0.1 to 1000 mM and preferably 10 to 100 mM.

The concentration of a buffering agent other than a kosmotropic salt may be in a range with buffering action, and it is preferably 0.1 to 1000 mM and more preferably 1 to 500 mM. The concentration of the chaotropic salt may be within a range known to produce a separative power-improving effect. Specifically, this is preferably 0.1 mM to 3000 mM, more preferably 1 mM to 1000 mM and most preferably 10 mM to 500 mM. This is because if it is lower than 0.1 mM the separation effect will be reduced and the measuring precision will be lower, while there is no further increase in the hemoglobin separation effect even at higher than 3000 mM.

When analyzing a hemoglobin mixture using an eluent, it is possible to separate not only the 3 types of hemoglobin components A0 and A2 or E, but also the abnormal hemoglobins E, D, S and C. A gradient using different types of eluents may also be used, and it may be either a step gradient or a linear gradient. For example, one or more eluents with higher elution strength than the eluent may be used, in order to improve the peak shape after hemoglobin A0 and abnormal hemoglobin E or A2 separation.

In particular, due to the large difference in retention between hemoglobin A0, A2 and abnormal hemoglobin E, and the abnormal hemoglobins D, S and C which elute later, it is preferred to combine an eluent with high elution strength in addition to the eluent mentioned above, for high precision analysis. Moreover, since residue of components with strong retention in the column significantly impairs the column durability, it is preferred to use another eluent with high elution strength in addition to the aforementioned eluent with high elution strength. When three or more different eluents are used, each of the eluents may be used after preparation, or they may be prepared within the system by a gradient procedure carried out in the analyzer.

For analysis of hemoglobin components that elute before hemoglobin A0 during analysis of a hemoglobin mixture using the aforementioned eluent, an eluent with weaker elution strength may also be used in addition to the eluent comprising the kosmotropic salt. The eluent with low elution strength may be of a single type or a plurality of different types. Using an eluent with low elution strength allows separation of components that elute before A0, and in particular it allows analysis of hemoglobin F and hemoglobin A1c.

There are no particular restrictions on the components for eluents with high elution strength and eluents with low elution strength to be used in addition to the kosmotropic salt-containing eluent, and any publicly known buffering agents may be used, either with the same components as the kosmotropic salt-containing eluent, or with different components, or a kosmotropic salt may even be absent. The level of elution strength can be adjusted by varying the salt concentration or pH, with no limitation to their ranges. However, the eluent with high elution strength used after the kosmotropic salt-containing eluent preferably has strength allowing sufficient elution of highly retained hemoglobin, and when eluting components after abnormal hemoglobin S, it is particularly preferred to use an eluent with a pH of 6.0 to 8.0 which is near the isoelectric point of hemoglobin. The eluent with weak elution strength is preferably at pH 4.0 to 6.0 in order to separate the components that elute before A0.

Publicly known techniques may also be used to increase the degree of separation of these components. For example, when an eluent containing a kosmotropic salt is to be passed through and then an eluent with greater elution strength is to be subsequently passed through, the method employed may be one in which an eluent with lower elution strength than the eluent containing the kosmotropic salt is passed through between them, to thereby increase the degree of separation between hemoglobin peaks.

There are no particular restrictions on the liquid chromatography device used for separation with the eluent of the invention, and it may be any publicly known one. For example, an apparatus composed of a liquid feed pump, sample injector, column, column oven and detector may be used. An accessory apparatus such as an eluent degasser may also be employed as appropriate.

In cation-exchange chromatography using an eluent of the invention, a column packed with a separating agent having at least one type of cation-exchange group is used. For example, the separating agent used may be one having a cation-exchange group introduced on the surfaces of polymer particles as the base. There are no particular restrictions on the cation-exchange groups introduced onto the particle surfaces in this case, and any publicly known carboxy, sulfo or phosphate groups may be used. Sulfo or carboxy groups are preferably used among these. There are also no particular restrictions on the size of the column used for packing of the separating agent, and it may be selected as appropriate for the separation conditions. The material of the column is also not particularly restricted, and any publicly known metal such as stainless steel, glass, or resin such as PEEK may be used.

### EXAMPLES

The invention will now be described in greater detail by Examples, with the understanding that the invention is not limited by the Examples.

### (Examples 1 to 11 and Comparative Example 1)

Columns prepared in the following manner were used for Examples 1 to 11 and Comparative Example 1. The columns were packed with a packing suitable for separation between hemoglobin A0, A2 and abnormal hemoglobin E, as described in Japanese Unexamined Patent Publication No. 2018-17560. For investigation using each column, separation of hemoglobin A0 and abnormal hemoglobin E was examined using an eluent prepared from a more kosmotropic salt than acetate in the Hofmeister series, or a salt species having a similar structure. The column packing was prepared in the following manner.

A mixture of 350 g of glycidyl methacrylate, 70 g of ethylene glycol dimethacrylate, 30 g of methyl methacrylate and 10 g of t-butyl perpivalate was stirred in an aqueous solution comprising 40 g of sodium sulfate and 200 g of polyvinyl alcohol, and crosslinking polymerization reaction was conducted for 12 hours at a reaction temperature of 60°C to obtain nonporous crosslinked polymer particles with particle sizes of 3.2 µm.

After dispersing 20 g of the crosslinked polymer particles and 20 g of 1,4-cyclohexanedimethanol in 200 g of 1,4-dioxane, 1 mL of boron trifluoride-diethyl ether was added and reaction was conducted at 70°C for 16 hours. After the reaction, the gel was washed with 1,4-dioxane and water and then air-dried to a suction dry state. A 15 g portion of the suction dry gel was dispersed in a 42% sodium hydroxide aqueous solution, and allylglycidyl ether was added dropwise while maintaining a liquid temperature of 40°C. The obtained polymer particles were washed again and then dispersed in an aqueous sodium sulfite solution, after which oxygen gas was blown in and reaction was conducted for 16 hours.

The obtained liquid chromatography packing was packed into a column with an inner diameter of 4.6 mm and a length of 0.8 cm, for use as a hemoglobin measuring column. A blood sample containing abnormal hemoglobin E was measured under the following conditions.
Flow rate: 2.0 mL/min
Monitoring wavelength: 415 nm
Step gradient:
   Eluent A: Buffering solution listed in Table 1 (0-4.0 min)
   Eluent B: Three-fold salt concentration of buffering solution listed in Table 1 (4.0-5.0 min)

The two different eluents used were as shown in Table 1. Eluent A alone was used for separation of hemoglobin components, and eluent B was prepared to a salt concentration of 3 times that of eluent A for use in column washing. For the Comparative Examples and Examples, the salt concentration of eluent A was set so that the retention time for hemoglobin A0 was constant.

**[Table 1]**

| | Added salt | pH | Concentration (mM) | ΔRT (E - A0) | ΔRT (A2 - A0) | Figure |
|---|---|---|---|---|---|---|
| Comp. Ex. 1 | Perchlorate | 5.35 | 50 | 0.333 | N.D. | 1 |
| Example 1 | Sulfate | 5.35 | 35 | 0.523 | N.D. | 2 |
| Example 2 | Acetate | 5.35 | 100 | 0.984 | 0.264 | 3 |
| Example 3 | Malonate | 5.35 | 50 | 0.799 | 0.405 | 4 |
| Example 4 | Succinate | 5.35 | 60 | 0.967 | 0.348 | 5 |
| Example 5 | Maleate | 5.35 | 55 | 0.638 | 0.346 | 6 |
| Example 6 | Fumarate | 5.35 | 40 | 0.759 | 0.421 | 7 |
| Example 7 | Malate | 5.35 | 50 | 1.014 | 0.401 | 8 |
| Example 8 | Tartrate | 5.35 | 45 | 1.082 | 0.397 | 9 |
| Example 9 | Citrate | 5.35 | 30 | 1.180 | 0.572 | 10 |
| Example 10 | Hydrochloride | 5.35 | 80 | 0.664 | 0.288 | 11 |
| Example 11 | Citrate/perchlorate | 5.35 | 10/20 | 0.776 | 0.477 | 12 |

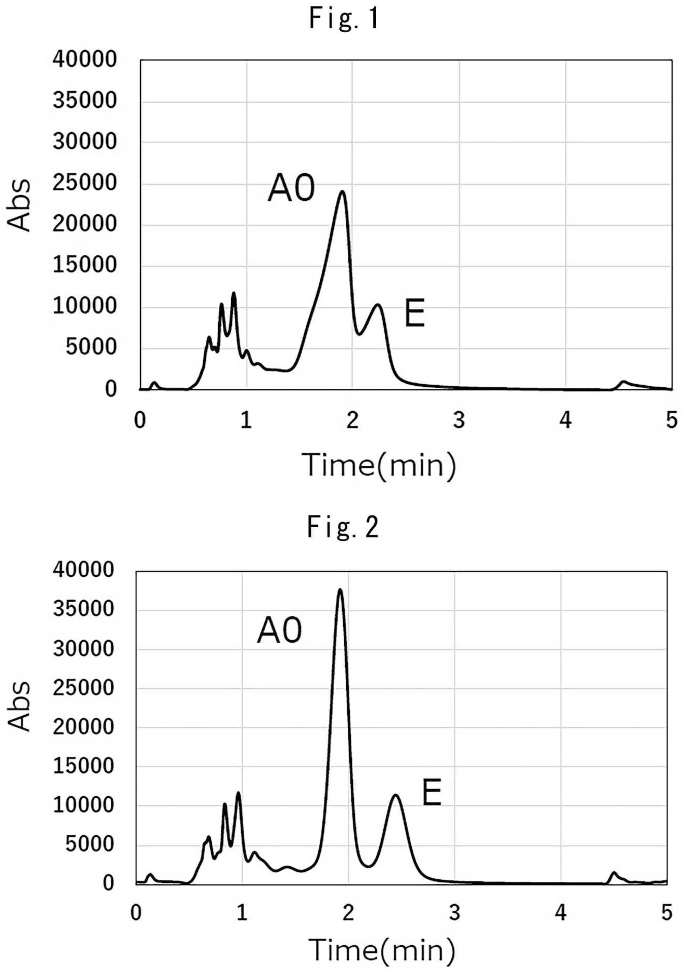

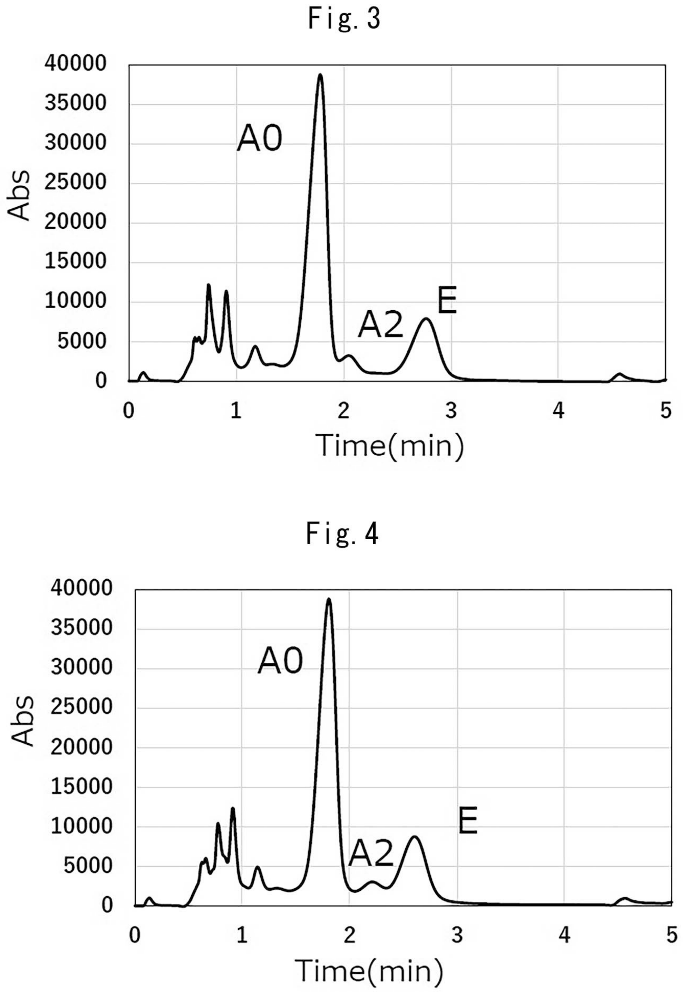

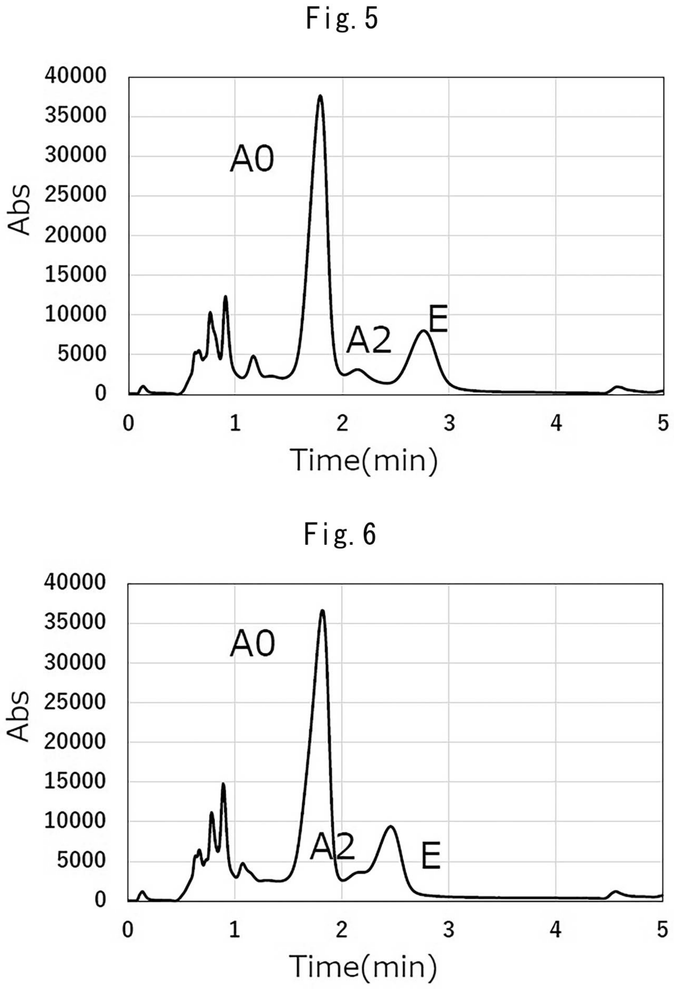

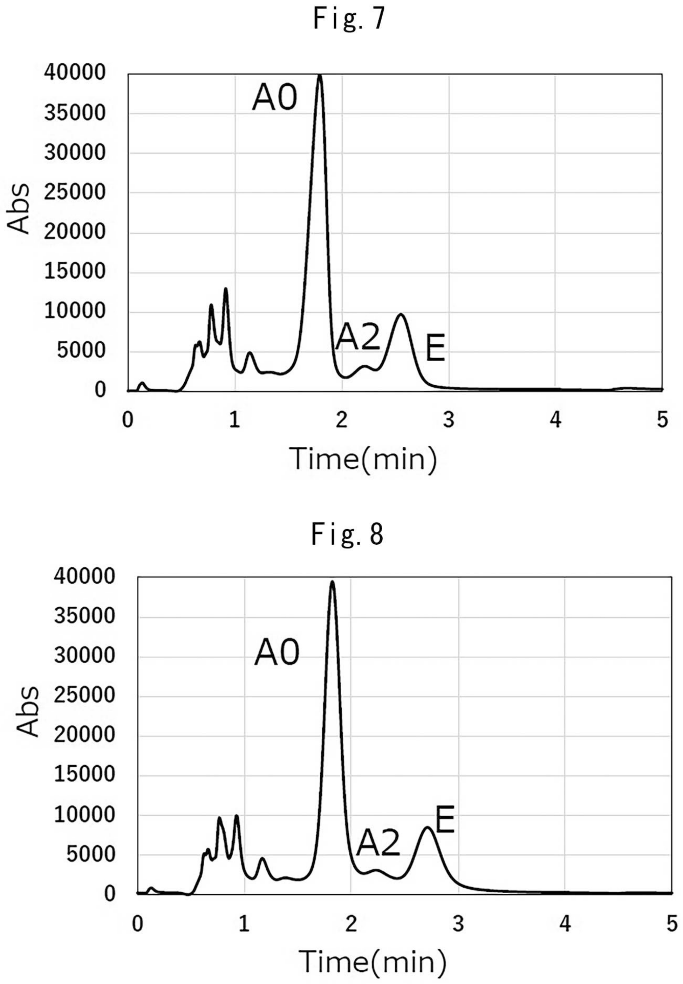

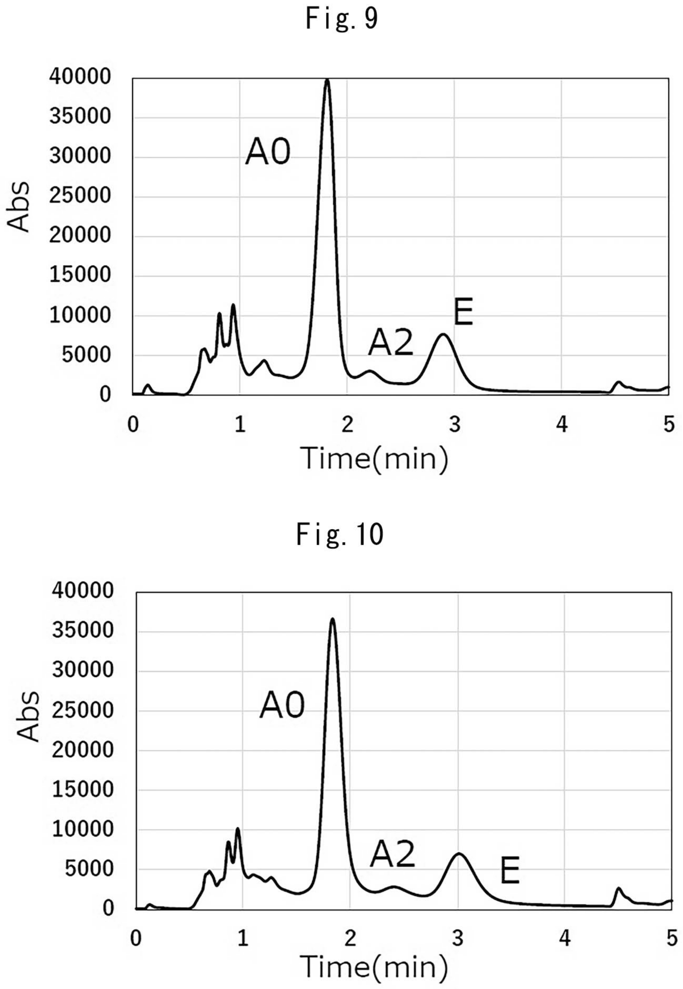

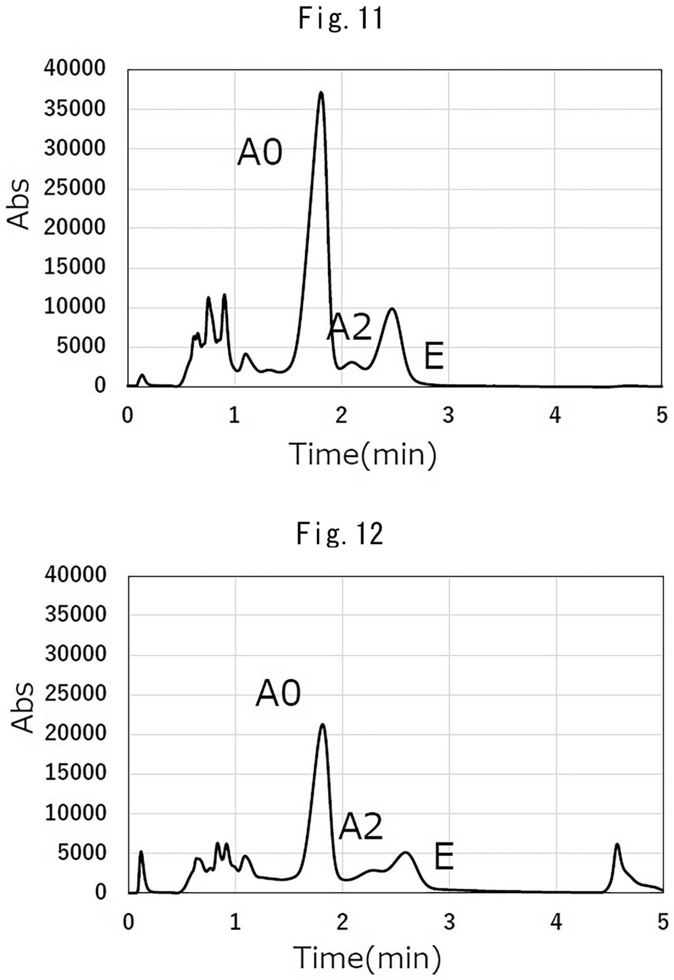

As shown in Table 1, an eluent prepared using a perchlorate, as a strong chaotropic salt outside of the range of the invention, was used for Comparative Example 1. Kosmotropic salts were used in Examples 1 to 10. In Comparative Example 1, the separation between hemoglobin A0 and abnormal hemoglobin E was insufficient, as shown in Fig. 1. Specifically, when using an eluent prepared entirely of a strong chaotropic salt such as a perchlorate as in Comparative Example 1, the components eluting after A0 had broader peaks and the separative power was very low. On the other hand, in Examples 1 to 10 which used eluents prepared from different kosmotropic salts, separation between hemoglobin A0 and the abnormal hemoglobin E was satisfactory, as shown in Figs. 2 to 11.

In Example 1, where a sulfate was used, hemoglobin A0 and abnormal hemoglobin E were separated more satisfactorily than in Comparative Example 1. With a salt of acetic acid (a monocarboxylic acid) in Example 2, the peaks were distinctly separate and the peak shape was satisfactory. The dicarboxylic acids of Examples 3 to 6 also exhibited satisfactory separative properties. When a succinate was used as in Example 4, the difference in retention time for hemoglobin E increased, with no change in retention time for hemoglobin A0. The difference in retention time between hemoglobin A0 and abnormal hemoglobin E was greatest with the hydroxycarboxylic acids of Examples 7 to 9. These successfully separated out even when a hydrochloride was used as in Example 10.

When the kosmotropic salt used was a carboxylate or hydrochloride as in Examples 2 to 10, hemoglobin A2 was detected between the peaks obtained by separation of hemoglobin A0 and abnormal hemoglobin E. When malonic acid and fumaric acid were used as dicarboxylic acids in Examples 2 to 6, the separative power between hemoglobin A0 and hemoglobin A2 was high. The hydroxycarboxylic acids of Examples 7 to 9 also allowed efficient separation between hemoglobin A0 and hemoglobin A2. Among Examples 2 to 10, the difference in retention time between hemoglobin A0 and A2 was largest when using the citrate of Example 9.

When the hydrochloride of Example 10 was used, the separation performance was not higher than with carboxylic acids, but it was possible to separate out hemoglobin A2, unlike the other inorganic salt (a sulfate). Thus, it was possible to separate hemoglobin A0 from abnormal hemoglobin E or hemoglobin A2 using kosmotropic salts on the level of acetate or greater in the Hofmeister series, or salt species having similar structures. As indicated by investigating dicarboxylic acids having similar structures, the optimal solvent can differ depending on the hemoglobin type, but kosmotropic salts were shown to be effective for separation of hemoglobin components that elute after hemoglobin A0.

An effect is obtained if one or more of these kosmotropic salts are present in the eluent. Even with an eluent containing a perchlorate as a strong chaotropic salt that is disadvantageous for use in separation of components that elute after hemoglobin A0, as in Example 11, it was still possible to separate hemoglobin A2 and abnormal hemoglobin E from hemoglobin A0 by addition of a citrate.

### (Examples 12 to 16)

In Examples 12 to 16, the columns used employed packings with poor separation performance for hemoglobin A0, A2 and abnormal hemoglobin E, compared to the packings used in Examples 1 to 11. Specifically, hemoglobin was prepared using the highly hydrophilic TSKgel SP-NPR by Tosoh Corp. (inner diameter: 4.6 mm, length: 3.5 cm). The measuring sample used was blood containing abnormal hemoglobin E. For this experiment, in addition to separation of hemoglobin A0 and E, hemoglobin F was also separated as a component that elutes before hemoglobin A0.
Flow rate: 1.5 mL/min
Monitoring wavelength: 415 nm
Step gradient:
   Eluent A: Phosphate buffer (50 mM, pH 6.0) (0-0.5 min)
   Eluent B: Buffering solution listed in Table 2 (0.5-3.0 min)
   Eluent C: Phosphate buffer (200 mM, pH 6.0) (3.0-5.0 min)

The eluents used as eluent B were as shown in Table 2. For this experiment, eluent A was used to separate hemoglobin F, and eluent B was used to separate hemoglobin A0 and E, with eluent C as the washing solution. Succinate or hydroxycarboxylate-containing eluents were examined in this experiment, such eluents having no observable difference in effect with the packings suitable for separation between hemoglobin A0 and abnormal hemoglobin E used in the Examples described above. For each of the Examples, the salt concentration of eluent B was set so that the retention time for hemoglobin A0 was constant.

**[Table 2]**

| | Added salt | pH | Concentration (mM) | ΔRT (E - A0) | Figure |
|---|---|---|---|---|---|
| Example 12 | Succinate | 6.0 | 60 | 0.167 | 13 |
| Example 13 | Tartrate | 6.0 | 40 | 0.263 | 14 |
| Example 14 | Citrate | 6.0 | 25 | 0.289 | 15 |
| Example 15 | Citrate | 6.5 | 10 | 0.532 | 16 |
| Example 16 | Citrate | 5.5 | 60 | 0.233 | 17 |

In Examples 12 to 14, the same conditions were employed for the pH of the solution of eluent A used for separation of components eluting before A0 and eluent B used for elution of components eluting after A0, which are known to be disadvantageous for separation of components after A0 according to PTL 2 (Table 2). In Examples 12 to 14, separation was possible between hemoglobin A0 and abnormal hemoglobin E in all cases. The hydroxycarboxylic acids tartaric acid and citric acid resulted in more satisfactory separation than the dicarboxylic acid succinic acid. Furthermore, since an effect of improved separative power between A0 and E was obtained in Example 13, despite the eluent being at pH 6.0 which was outside of the buffer range for tartrate (pKa = 4.8), this indicates that the kosmotropic salt not only acts as a buffer to stabilize the chromatogram measurement results, but also contributes significantly to separation of hemoglobin.

Examples 15 and 16 examined the pH of eluent B using a citrate as the salt species. As a result it was found that using eluent B at pH 6.5, which was 0.5 higher than eluent A, produced highly satisfactory separation between hemoglobin A0 and abnormal hemoglobin E. On the other hand, separation performance between hemoglobin A0 and abnormal hemoglobin E was still high even when using eluent B with pH 5.5 which was 0.5 lower than eluent A, with a particularly notable improving effect on separative power being seen with addition of a hydroxycarboxylic acid. This indicated that even when using packings with different properties, it is effective to use a kosmotropic salt suitable for separation of hemoglobin A0 and abnormal hemoglobin E.

### (Examples 17 to 19)

The columns used in Examples 12 to 16 were also used for Examples 17 to 19. The measuring sample used was control level 2 by Canterbury Scientific. The sample included abnormal hemoglobin S.
Flow rate: 1.5 mL/min
Monitoring wavelength: 415 nm
Step gradient:
   Eluent A: Phosphate buffer (50 mM, pH 6.0) (0-0.5 min)
   Eluent B: Buffering solution listed in Table 3 (0.5-3.0 min)
   Eluent C: Phosphate buffer (200 mM, pH 6.0) (3.0-5.0 min)

The eluents used as eluent B were as shown in Table 3. For this experiment, eluent A was used to separate hemoglobin F, and eluent B was used to separate hemoglobin A0 and A2, with eluent C as the washing solution. For the Comparative Examples and Examples, the salt concentration of eluent B was set so that the retention time for hemoglobin A0 was constant.

**[Table 3]**

| | Added salt | pH | Concentration (mM) | ΔRT (A2 - A0) | Figure |
|---|---|---|---|---|---|
| Example 17 | Citrate | 6.0 | 25 | 0.261 | 18 |
| Example 18 | Citrate/phosphate | 6.0 | 20/25 | 0.209 | 19 |
| Example 19 | Citrate/perchlorate | 6.0 | 10/15 | 0.187 | 20 |

Even when a suitable packing for separation of hemoglobin A0 and A2 was not used, it was still possible to efficiently separate the peaks by using citric acid as in Example 17. Separation was also possible without any problems using a citrate/phosphate mixture as in Example 18. Even with a strong chaotropic salt such as a perchlorate as in Example 19, it was still possible to separate hemoglobin A0 and A2 by addition of a citrate (hydroxycarboxylic acid salt).

### (Examples 20 and 21)

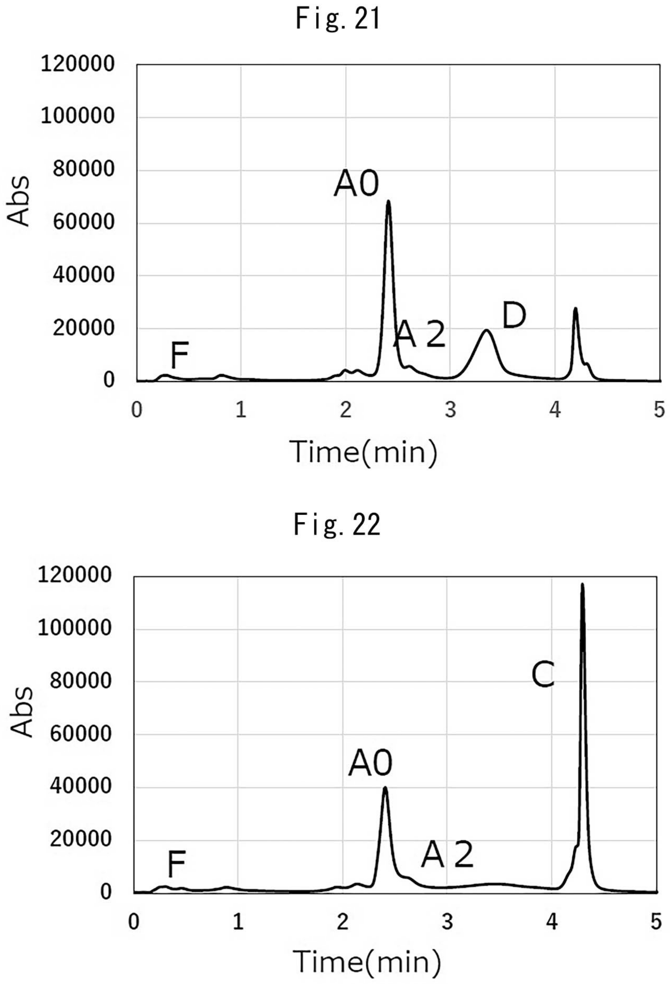

In Examples 20 and 21, it was confirmed that using the eluent system described herein allows separation of abnormal hemoglobin D or C from hemoglobin A0. Specifically, when the conditions of Example 13 were used to measure a sample containing abnormal hemoglobin D (Example 20) and a sample containing abnormal hemoglobin C (Example 21), it was possible to successfully separate each abnormal hemoglobin (Fig. 21: Example 20, Fig. 22: Example 21).

## Claims

1. An eluent to be used during analysis of a hemoglobin mixture using cation-exchange chromatography, for analysis of hemoglobin components that elute after the hemoglobin A0 component,
the eluent being passed through for separation and analysis of at least one from among abnormal hemoglobin E, D, S, C or hemoglobin A2 from the hemoglobin A0 component, and
the eluent comprising one or more selected from among salts of carboxylic acids, hydrochloric acid and sulfuric acid, which are kosmotropic salts of the Hofmeister series, or salt species having structures similar to them.

2. The eluent according to claim 1, wherein the kosmotropic salt includes one or more selected from among salts of acetic acid, succinic acid and hydroxycarboxylic acids.

3. The eluent according to any one of claims 1 to 2, wherein the kosmotropic salt is a salt of citric acid.

4. The eluent according to any one of claims 1 to 3, wherein the kosmotropic salt is a carboxylic acid salt, and which is passed through when separating and analyzing hemoglobin A0 and A2.

5. The eluent according to claim 4, wherein the kosmotropic salt is selected from among one or more salts of malonic acid, fumaric acid and hydroxycarboxylic acids.

6. The eluent according to any one of claims 4 to 5, wherein the kosmotropic salt is a salt of citric acid.

7. A method using an eluent according to any one of claims 1 to 6, wherein at least one of the abnormal hemoglobins E, D, S, C or hemoglobin A2 is separated and analyzed from the hemoglobin A0 component.

8. An analysis method using an eluent according to any one of claims 1 to 6, wherein:
in addition to the eluent according to any one of claims 1 to 6 which is passed through when separating and analyzing hemoglobin A0 from abnormal hemoglobin E or A2,
at least one eluent with weaker elution strength than that eluent is passed through to separate and elute out the hemoglobin components that elute before the A0 component, and
after either or both hemoglobin F and hemoglobin A1c are separated and eluted, the eluent according to any one of claims 1 to 6 is passed through to separate and elute out the hemoglobin A0 from the abnormal hemoglobin E or A2.
